# EUROPEAN PATENT APPLICATION

(11) **EP 1 048 936 A1**
(43) Date of publication of application: **02.11.2000**
(21) Application number: 00108541.4
(22) Date of filing: 19.04.2000
(51) Int. Cl.: G01F 11/24, G01F 11/26

(54) **Multipurpose measuring cap device for powders or slippery substances**

(30) Priority: 26.04.1999 AR 9901922
(71) Applicant: Marachli Levy, Alegre Maria, Buenes Aires (AR); Levi, Roberto Elias, Buenos Aires (AR); Strasberg, Ernesto Javier, Buenes Aires (AR)
(72) Inventor: Marachli Levy, Alegre Maria, Buenes Aires (AR); Levi, Roberto Elias, Buenos Aires (AR); Strasberg, Ernesto Javier, Buenes Aires (AR)
(74) Representative: Pereira da Cruz, Joao

(57) **Abstract**

The measuring cap for powder, granules and slippery substances is a device which solves the problem of administering the exact quantity of a product to be used for a particular task. The applications of this device are general and it can be used with household, medical or industrial products, such as powdered chemicals, medicinal drugs without the need to compress them, culinary condiments, etc.

## Description

The measuring cap for powder, granules and slippery substances is a device which solves the problem of administering the exact quantity of a product to be used for a particular task. The applications of this device are general and it can be used with household, medical or industrial products, such as powdered chemicals, medicinal drugs without the need to compress them, culinary condiments, etc.

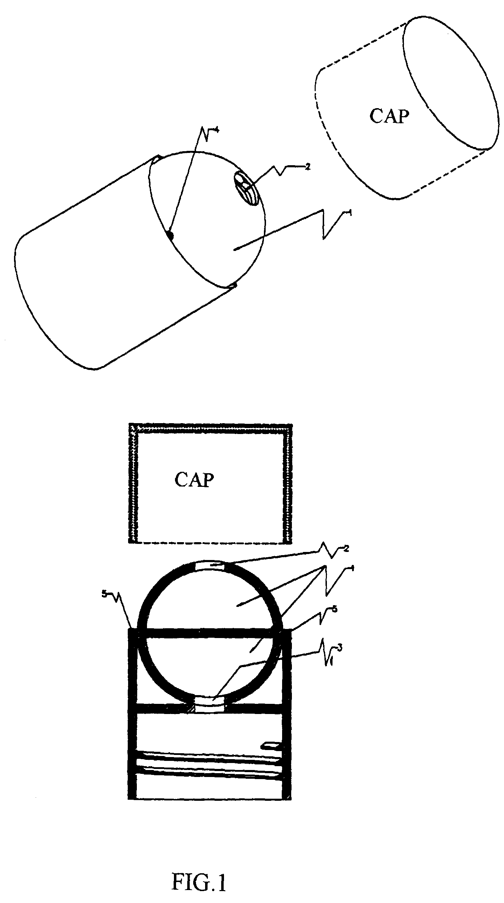

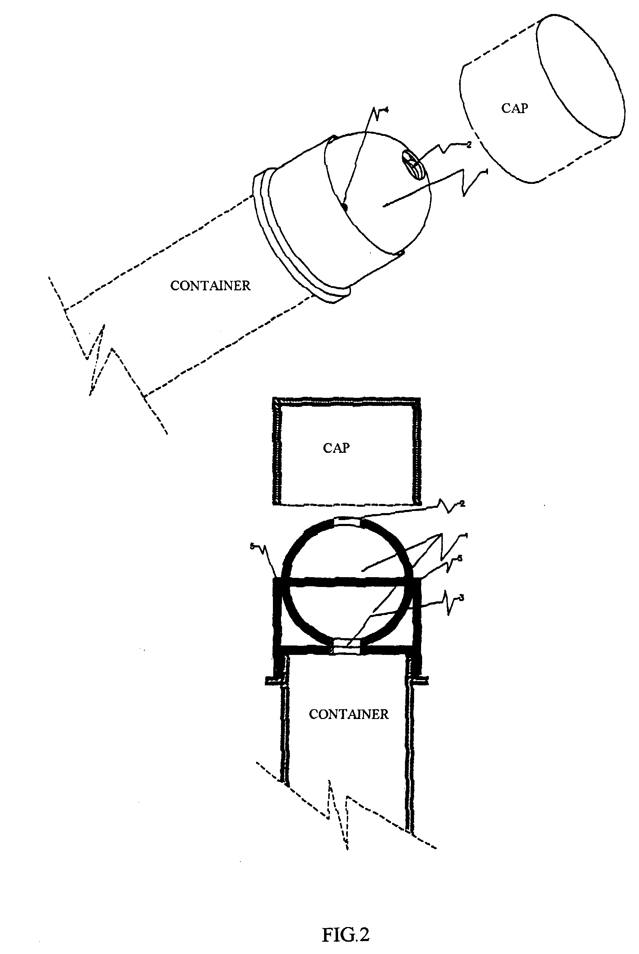

This device can be used as a measuring cap for any container, in accordance with figure 1, or it can form part of a generic container, as shown in figure 2.

The need to avoid using additional elements in order to measure out a dose led me to develop this device, which has the advantage of being tamper-proof, it cannot be inadvertently emptied and is easy to use, and it avoids any direct contact between the product stored in the container and the outside.

In order to measure the exact quantity of the product to be used, this device has a system of hemispherical cavities whose capacity is predetermined according to the type of use. There are two hemispherical cavities (1), each of which has an orifice acting as an entrance (2) or an exit (3), depending on the case. Both of the hemispheres are fixed in position by means of two buttons (4) which act as stops and prevent the involuntary movement of the hemispheres, which in turn rotate on two axes joined to the body of the container (5) so that when it is necessary to administer a dose, the container is tipped downwards, the hemisphere is rotated, having been filled beforehand by the action of gravity with the product to be administered, while the other hemisphere remains inside the container. The quantity of fluid which is poured out is the amount which is inside the body of the hemisphere (1) filled previously.

The quantity of fluid to be poured out is regulated by varying the volume of the hemisphere, so that the greater the volume the greater the quantity of fluid to be poured out or vice versa. The quantity to be poured out can be easily calculated in accordance with the volume of the hemisphere which contains it.

## Claims

1. Measuring cap which uses a system of hemispherical cavities whose capacity is predetermined each time the device needs to be used.

2. Measuring cap according to claim 1 with an exit or entrance orifice in each one of said hemispherical cavities according to the position that it occupies when it is in use.

3. Measuring cap according to claim 1 with a protective cap which avoids permanent contact with the outside.

4. Measuring cap according to claim 1 activated by rotating said hemispheres (which are joined) on two axes.

5. Measuring cap according previous claims with stops on both sides of the hemispheres in order to avoid the involuntary movement thereof which can be adapted to any type of screw container with a fixed cap or it can form part of the container, preventing the container from emptying if it accidentally falls, and which can be adapted to any size or volume according to the quantity to be administered.
